# EUROPÄISCHE PATENTSCHRIFT

(11) **EP 2 105 357 B1**
(45) Veröffentlichungstag und Bekanntmachung des Hinweises auf die Patenterteilung: **24.04.2013**
(21) Anmeldenummer: 09155167.1
(22) Anmeldetag: 13.03.2009
(51) Int. Cl.: B60R 21/239

(54) **Airbagmantelelement**
Airbag cover element
Elément d'enveloppe d'airbag

(30) Priorität: 26.03.2008 DE 102008015731
(43) Veröffentlichungstag der Anmeldung: 30.09.2009
(73) Patentinhaber: Schreiner Group GmbH & Co. KG, 85764 Oberschleissheim (DE)
(72) Erfinder: Hufnagel, Volker, 82211 Herrsching (DE); Braun, Uwe, 80995 München (DE)
(74) Vertreter: Epping - Hermann - Fischer

(56) Entgegenhaltungen:
- EP-A- 1 686 016
- WO-A-95/03953
- DE-A1- 10 332 549
- DE-U1- 29 609 703
- US-A1- 2004 012 179

## Beschreibung

Die vorliegende Erfindung betrifft Airbagmantelelemente, insbesondere Airbagmantelelemente, welche eine Außenlage mit einer Gasabströmöffnung und eine airbaginnendruckabhängig einen Gasabstrom durch die Gasabströmöffnung behindernde, auf der dem Airbaginneren zugewandten Seite der Außenlage angeordnete Ventilschlusslage aufweisen.

Bei der Konstruktion von Systemen für die passive Sicherheit von Fahrzeuginsassen in Serienfahrzeugen besteht eine Schwierigkeit darin, dass diese Systeme nicht auf eine bestimmte Person maßgeschneidert werden können, sondern vielmehr so konstruiert werden müssen, dass Fahrzeuginsassen unterschiedlichen Körperbaus gleichermaßen gegen Verletzungen geschützt werden sollen. Dies stellt insbesondere bei der Auslegung von Airbags eine Herausforderung dar, da Personen mit hohem Körpergewicht bei gleichen Randbedingungen wesentlich tiefer in einen Airbag eintauchen würden als Personen mit niedrigem Körpergewicht. Neben dem Körpergewicht hängt die kinetische Energie des auf den Airbag auftreffenden Fahrzeuginsassen selbstredend ganz erheblich von der negativen Beschleunigung des Fahrzeugs ab. Wünschenswert ist ein geringerer Airbaginnendruck, wenn ein Insasse geringer kinetischer Energie auf den Airbag auftrifft, wobei der Druck im Verlauf des Eintauchens meist noch weiter reduziert werden soll. Dem Auftreten eines Insassen hoher kinetischer Energie soll dagegen bei gleicher Airbagdicke mit höherem Innendruck begegnet werden, wobei eine allzu starke Druckabnahme beim Abströmen des Gases während des Eintauchens vermieden werden soll. Um eine möglichst gleichbleibend gute Schutzwirkung für unterschiedlich schwere Insassen bei verschieden starken negativen Beschleunigungen zu erreichen, werden meist aufwendig entwickelte elektromechanische Sensorik- und Ventilsysteme eingesetzt, welche die Airbag-Zündleistung und den Gasabstrom aus dem Airbag steuern. Derartige Systeme sind meist gut wirksam jedoch teuer. Zudem bestehen generell gewisse Vorbehalte gegen das Überhandnehmen aufwendiger Sensorik für die passive Fahrzeugsicherheit, da elektronische Systeme grundsätzlich eine, wenn auch meist geringe, so doch vorhandene Ausfallgefahr mit sich bringen, welche mit zunehmender Komplexität steigt.

Ein Airbagmantelelement der eingangs genannten Art kann helfen, die Komplexität eines Airbagsystems zu verringern und den mit der technischen Umsetzung einhergehenden Kostenaufwand zu senken. In der deutschen Offenlegungsschrift DE 102 23 189 A1 ist ein aus mehreren miteinander vernähten Gewebelagen bestehender Airbagmantel beschrieben, bei welchem die in einer Mantelaußenlage vorgesehene Gasabströmöffnung von einer Fangdomlage aus einem Gewebe vorgegebener Gasdurchlässigkeit überdeckt ist. Das Gewebe der Fangdomlage ist mit anderen Lagen des Airbagmantels so vernäht, dass es unterhalb eines Schwellendrucks von der Gasabströmöffnung beabstandet ist. Wird der Schwellendruck überschritten, reißt eine Reißnaht und erlaubt es der Fangdomlage sich im Bereich der Gasabströmöffnung so an die Mantelaußenlage anzulegen, dass der Gasabstrom weiter behindert wird. Durch das Erfordernis definiert reißender Reißnähte ist die Auslegung eines derartigen Airbagmantels ebenfalls nicht ganz einfach. Zudem können die erforderlichen Nahtverläufe die Fertigung erschweren, zumal Nähfehler die Funktionssicherheit beeinträchtigen können und daher aufwendige Vorkehrungen getroffen werden müssen, diese weitestgehend auszuschließen.

Letzteres gilt insbesondere bei einer nach der EP1686016 bekannten Ausführung, wonach eine innere und eine äussere Gewebeschicht so miteinander verbunden sind, sodass dazwischen ein Zwischen- oder Innenraum gebildet ist, in dem eine mittlere Gewebeschicht angeordnet ist, wobei die mittlere Gewebeschicht an einer Stelle sowohl mit der inneren als auch mit der äusseren Gewebeschicht verbunden ist.

Diese mittlere Gewebeschicht ist im Zwischenraum derart angeordnet, dass die nur an ihrem Zentrumsabschnitt mit der inneren und der äusseren Gewebeschicht verbunden ist, d.h. der radial äussere Randabschnitt liegt lose zwischen der inneren und der äusseren Gewebeschicht.

Bei einer solchen Konstruktion dehnen sich die innere und die äussere Gewebeschicht bei steigendem Gassackinnendruck "synchron" miteinander, während die mittlere Gewebeschicht nur an der Verbindungsstelle zur inneren und äusseren Gewebeschicht eine Dehnung erfährt, so dass sich dadurch die relative Verschiebung der Öffnungen zueinander ergibt.

Vor dem Hintergund der geschilderten Problematik ist es Aufgabe der vorliegenden Erfindung, die Fertigung von Airbagmänteln bei gleichbleibender oder gesteigerter Funktionssicherheit zu vereinfachen und zu flexibilisieren.

Gemäß einem Aspekt der vorliegenden Erfindung wird die zugrundeliegende Aufgabe gelöst durch ein Airbagmantelelement der eingangs genannten Art, bei welchem die Ventilschlusslage eine umlaufende Randfixierung aufweist, mit welcher sie an der Außenlage fixiert, vorzugsweise verklebt, ist, die Ventilschlusslage ferner innerhalb des von der Randfixierung umrandeten Bereichs frei von Verbindungen, insbesondere Nähten, zur Außenlage und anderen Lagen (sofern vorhanden) des Airbagmantelelements ist, und innerhalb des von der Randfixierung umrandeten Bereichs mindestens eine Gasdurchströmöffnung aufweist.

Gemäß einem weiteren Aspekt der vorliegenden Erfindung wird diese Aufgabe gelöst durch ein Airbagmantelelement der eingangs genannten Art, wobei die Ventilschlusslage mindestens eine, vorzugsweise mehrere, die Gasabströmöffnung ringförmig umgebende, zur Gasabströmöffnung überschneidungsfrei versetzte Gasdurchströmöffnung(en) aufweist und die Gasabströmöffnung öffnungsfrei überdeckt. Ein höherer Airbaginnendruck drückt die Ventilschlusslage stärker gegen die Außenlage und verringert so den Gasabstrom durch die Gasabströmöffnung. Ein solches Airbagmantelelement kann als integraler Teil des Airbagmantels oder als (airbaginnen- oder außenseitig) über einer Airbagmantelöffnung anzubringendes separates Funktionsteil ausgebildet sein.

Erfindungsgemäß sind keine Reißnähte erforderlich, um die Funktion zu gewährleisten. Vorzugsweise sind Ventilschlusslage und die Außenlage miteinander verklebt, so dass eine Herstellung ohne Nähen möglich ist. Je nach gewählten Materialien ist auch eine Verschweißung, eine Vernähung oder eine Kombination verschiedener Verbindungstechniken möglich.

Erfindungsgemäß muss die Ventilschlusslage auch nicht gasdurchlässig sein, wodurch die Materialauswahl flexibler vorgenommen werden kann. Neben, vorzugsweise weitgehend oder vollständig gasdichten Geweben kann die Ventilschlusslage vorteilhafterweise auch aus einer Kunststofffolie, einer starren oder elastischen Membran oder einem Verbundmaterial bestehen. Grundsätzlich sind eine Vielzahl von Flachmaterialien für die Ventilschlusslage und die Außenlage wählbar. Jede der Lagen kann auch ihrerseits aus mehreren Schichten aufgebaut sein.

Gemäß einer besonders bevorzugten Ausführungsform sind die Gasdurchströmöffnungen als (vorzugsweise ovale oder runde) Materialausnehmungen umgesetzt. Grundsätzlich ist es jedoch auch möglich, diese in Form von Schlitzen oder dergleichen auszuführen.

Gemäß einem weiteren Aspekt der vorliegenden Erfindung wird die zugrundeliegende Aufgabe gelöst durch ein Airbagmantelelement der eingangs genannten Art, bei welchem die Ventilschlusslage als Zwischenlage zwischen der Außenlage und einer Innenlage angeordnet ist, wobei die Innenlage eine die Gasabströmöffnung zumindest teilweise, vorzugsweise größtenteils oder vollständig, überdeckende Innenöffnung aufweist, und die Ventilschlusslage eine die Gasabströmöffnung und die Innenöffnung airbaginnendruckabhängig jeweils zumindest teilweise überdeckende sowie airbaginnendruckabhängig relativ zur Gasabströmöffnung und/oder zur Innenöffnung tangential verschiebliche Gasdurchströmöffnung aufweist.

Wölbt sich das Airbagmantelelement aufgrund der Airbaginnendruckverhältnisse nach außen, wird gemäß diesem Erfindungsaspekt eine seitliche Verschiebung der Ventilschlusslage im Bereich der Gasdurchströmöffnung relativ zu Außen- und Innenlage ausgelöst, wodurch der Bereich der Überdeckung zwischen der Gasabströmöffnung und/oder Innenöffnung und der Gasdurchströmöffnung kleiner wird, so dass nur ein geringerer Gasstrom aus dem Airbag entweichen kann.

Vorzugsweise ist die Gasdurchströmöffnung als Materialausnehmung ausgeführt.

Auch hier sind erfindungsgemäß wiederum keine Reißnähte erforderlich, um die Funktion zu gewährleisten. Vorzugsweise sind die Ventilschlusslage und die Außenlage und/oder Innenlage miteinander verklebt, so dass eine Herstellung als Funktionsteil ohne Nähen möglich ist. Je nach gewählten Materialien ist auch hier eine Verschweißung möglich.

Hinsichtlich der Materialwahl gilt das Obengesagte auch für die Innenlage.

Gemäß einer besonders bevorzugten Ausführungsform lässt sich die Verschieblichkeit der Gasdurchströmöffnung erreichen, indem die Ventilschlusslage eine die Gasdurchströmöffnung teilweise umgebende Trennlinie aufweist. Dabei kann die Ventilschlusslage an der Trennlinie vollständig durchtrennt sein, beispielsweise indem die Trennlinie als Stanzung, Schlitzung oder Schnitt ausgeführt wird. Gemäß einer alternativen vorteilhaften Ausführungsform kann die Trennlinie als Schwächungslinie ausgeführt sein, so dass eine nennenswerte Verschiebung der Gasdurchströmöffnung erst einsetzen kann, wenn eine aufgrund der Überschreitung eines gewissen Airbaginnendrucks auftretende Mindestspannung in der Ventilschlusslage einen Riss entlang der Schwächungslinie bewirkt.

Gemäß einer vorteilhaften Weiterbildung der Erfindung weist das Airbagmantelelement eine zwischen Ventilschlusslage und Innenlage angeordnete weitere Ventilschlusslage auf, wobei die weitere Ventilschlusslage eine die Gasabströmöffnung und die Innenöffnung airbaginnendruckabhängig jeweils zumindest teilweise überdeckende und airbaginnendruckabhängig relativ zur Gasdurchströmöffnung der anderen Ventilschlusslage sowie relativ zur Gasabströmöffnung und/oder zur Innenöffnung tangential verschiebliche Gasdurchströmöffnung aufweist. Grundsätzlich kann die weitere Ventilschlusslage im Wesentlichen ebenfalls so ausgeführt sein, wie die im Zusammenhang mit obigen bevorzugten Ausführungsformen beschriebene Ventilschlusslage.

Grundsätzlich kann jede im Rahmen der vorliegenden Anmeldung beschriebene bzw. angedeutete Variante der Erfindung besonders vorteilhaft sein, je nach wirtschaftlichen und technischen Bedingungen im Einzelfall. Soweit nichts Gegenteiliges dargelegt ist, bzw. soweit grundsätzlich technisch realisierbar, sind einzelne Merkmale der beschriebenen Ausführungsformen austauschbar oder miteinander sowie auch mit aus dem Stand der Technik per se bekannten Maßnahmen kombinierbar.

Allen Varianten gemeinsam ist, dass nicht der gesamte Airbagmantel mehrlagig ausgeführt sein muss, sondern Ventilschlusslage und Innenlage (sofern vorhanden) nur lokal ausgebildet zu sein brauchen, so dass sich ein örtlich begrenztes Airbagmantelelement ergibt. Erfindungsgemäße Airbagmantelelemente brauchen auch nicht als integrales Teil des Airbagmantels gefertigt zu sein, sondern können auch als separate Funtkionsteile hergestellt werden und dann über einfachen Öffnungen in Airbagmänteln angebracht werden, z.B. durch Kleben, Schweißen oder Nähen. Es kann vorteilhaft sein, mehrere derartige Airbagmantelelemente vorzusehen. Andererseits kann ein Airbagmantelelement auch so ausgedehnt werden, dass er sich über einen großen Bereich des Airbagmantels oder über den gesamten Airbagmantel erstreckt.

Nachfolgend werden anhand der zugehörigen Zeichnungen Beispiele bevorzugter Ausführungsformen der vorliegenden Erfindung näher erläutert. Die Zeichnungen sind dabei rein schematische und aus Gründen der Anschaulichkeit, nicht maßstäbliche Darstellungen. Insbesondere können Verhältnisse der Abmessungen zueinander von tatsächlichen Ausführungen abweichen. Einander entsprechende Elemente sind in den einzelnen Figuren jeweils, soweit sinnvoll, mit den gleichen Bezugszeichen versehen.
- Fig. 1: zeigt ein Airbagmantelelement gemäß einer Ausfüh- rungsform der vorliegenden Erfindung in der Drauf- sicht, von der Airbaginnenseite aus gesehen.
- Fig. 2: zeigt das Airbagmantelelement aus Fig. 1 in einer Schnittansicht entlang der Schnittlinie A-A1 in Fig. 1, wobei die Pfeile in Fig. 1 die Blickrich- tung anzeigen.
- Fig. 3: zeigt ein Airbagmantelelement gemäß einer weiteren Ausführungsform der vorliegenden Erfindung in der Draufsicht, von unten, d.h. bestimmungsgemäß von der Airbaginnenseite aus gesehen.
- Fig. 4: zeigt das Airbagmantelelement aus Fig. 3 in einer Schnittansicht entlang der Schnittlinie B-B1 in Fig. 3, wobei die Pfeile in Fig. 3 die Blickrich- tung anzeigen.
- Fig. 5: zeigt die Schnittansicht aus Fig. 4 in einem von gestiegenem Innendruck des Airbags herrührenden Verformungszustand.
- Fig. 6: zeigt die Schnittansicht eines erfindungsgemäßen Airbagmantelelements ähnlich Fig. 4, wobei jedoch in der dargestellten Ausführungsform zwei überein- ander angeordnete Ventilschlusslagen vorgesehen sind.
- Fig. 7: zeigt die Schnittansicht aus Fig. 6 in einem von gestiegenem Innendruck des Airbags herrührenden Verformungszustand.

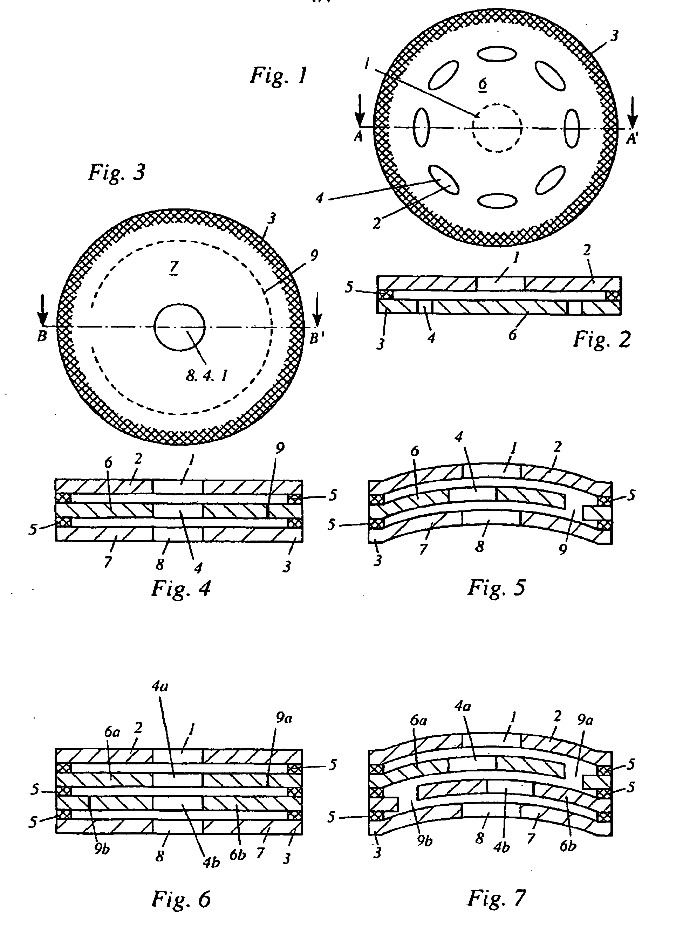

Das in Figuren 1 und 2 dargestellte erfindungsgemäße Airbagmantelelement kann als Ausschnitt eines Airbagmantels oder als separates, über einer Öffnung eines Airbagmantels anzubringendes Funktionselement aufgefasst (und entsprechend technisch ausgeführt) werden, welches den Gasstrom durch die Gasabströmöffnung 1 in der Außenlage 2 bei steigendem Airbaginnendruck begrenzt.

Im Randbereich 3 des Airbagmantelelements ist die Ventilschlusslage 6 über eine Verklebung 5 mit der Außenlage 2 verbunden. Beide Lagen 2, 6 können jeweils aus einem Kunststofffolienverbund, einer einlagigen Folie, einem möglichst gasdichten Gewebe oder dergleichen gefertigt sein. Innerhalb der vom Randbereich 3 umgebenen Fläche ist die Ventilschlusslage 6 weder mit der Außenlage 2 noch mit einer anderen Lage des Airbagmantelelements verbunden.

Die Gasabströmöffnung 1 wird durch die Ventilschlusslage 6 vollständig verdeckt. Gas kann jedoch aus dem Airbag abströmen, indem es durch die Gasdurchströmöffnungen 4, welche als ringförmig um die Gasabströmöffnung 1 angeordnete, ovale Materialausnehmungen in der Ventilschlusslage 6 ausgebildet sind, zwischen Ventilschlusslage 6 und Außenlage 2 gelangt.

Bei zunehmendem Airbaginnendruck wird die Ventilschlusslage 6 stärker gegen die Außenlage 2 gedrückt, was die Abdichtung der Gasabströmöffnung 1 erhöht und somit den aus dem Airbaginnenraum austretenden Gasstrom vermindert. Um den druckabhängigen Gasabstrom durch die Gasabströmöffnung 1 im gewünschten Bereich zu halten, stehen dem Konstrukteur mehrere Parameter zur Variation zur Verfügung. Insbesondere kann die Anzahl und Größe der Gasdurchströmöffnungen 4 sowie deren Abstand zur Gasabströmöffnung 1 weitgehend frei gewählt werden. Die genaue Auslegung kann dann mittels Prototypversuchen mit der wunschgemäßen Airbaggeometrie oder aber mit über einen geeigneten Druckzylinder gespannten Airbagmantelelementen ermittelt werden.

Sowohl die Gasabströmöffnung 1 als auch die Gasdurchströmöffnungen 4 können vorteilhaft z.B. durch Stanzen hergestellt werden.

In Figuren 3 bis 5 ist ebenfalls ein erfindungsgemäßes Airbagmantelelement dargestellt, welches den Gasstrom durch die Gasabströmöffnung 1 in der Außenlage 2 bei steigendem Airbaginnendruck begrenzt.

Hier ist die Gasabströmöffnung 1 nicht (oder, bei alternativen Ausführungen, zumindest nicht vollständig) von der Ventilschlusslage 6 verdeckt, welchletztere als Zwischenlage zwischen Außenlage 1 und Innenlage 7 ausgeführt ist. Vielmehr sind die Gasabströmöffnung 1 in der Außenlage 2, die Gasdurchstromöffnung 4 in der Ventilschlusslage 6 und eine Innenöffnung 8 in der Innenlage 7 in etwa fluchtend angeordnet. Bei alternativer Ausführung überdecken sie sich zumindest teilweise. Alle Öffnungen 1, 4 und 8 können wiederum durch Stanzen hergestellt sein.

Im Randbereich 3 des Ventilbereichs ist die Ventilschlusslage 6 jeweils über eine Verklebung 5 mit der Außenlage 2 und der Innenlage 7 verbunden. Alle Lagen 2, 6, 7 können jeweils aus einem Kunststofffolienverbund, einer einlagigen Folie, einem möglichst gasdichten Gewebe oder dergleichen gefertigt sein. Innerhalb der vom Randbereich 3 umgebenen Fläche ist die Ventilschlusslage 6 weder mit der Außenlage 2 noch mit der Innenlage 7 verbunden.

Die Ventilschlusslage 6 weist eine Trennlinie 9 in Form eines offenen Rings auf, welcher die Gasdurchströmöffnung 4 umgibt.

Bei steigendem Airbaginnendruck erfährt der Ventilbereich eine zunehmende Wölbung, wie in Fig. 5 dargestellt. Der Bereich der Ventilschlusslage 6, welcher die Gasdurchströmöffnung 4 enthält, ist aufgrund der Trennlinie 9 nur einseitig fixiert und vom Rest des Systems weitgehend entkoppelt, so dass er sich relativ zur Außenlage 2 und Innenlage 7 verschiebt, mit zunehmender Auswölbung der Außenlage 2 und Innenlage 7 fluchtet, die Gasdurchstromöffnung 4 in der Ventilschlusslage 6 immer weniger mit der Gasabströmöffnung 1 in der Außenlage und der Innenöffnung 8 in der Innenlage 7. Stattdessen wird ein immer größerer Bereich der Gasabströmöffnung 1 von der Ventilschlusslage 6 überdeckt und der Gasabstrom so behindert.

Die Auslegung kann wiederum über Versuche erfolgen. Als Auslegungsparameter stehen dabei, neben Materialeigenschaften wie Materialstärke, Dehnbarkeit und Elastizität, insbesondere Form und Größe der Gasdurchstromöffnung 4, der Gasabströmöffnung 1 und der Innenöffnung 8 zur Verfügung. Ferner kann auch deren Anfangslage relativ zueinander so verändert werden, dass sie sich jeweils nur teilweise überdecken.

Fig. 6 zeigt die Schnittansicht eines weiteren erfindungsgemäßen Airbagmantelelements ähnlich Fig. 4, wobei jedoch zwischen (nachfolgend erster) Ventilschlusslage 6a und Innenlage 7 eine weitere (nachfolgend zweite) Ventilschlusslage 6b vorgesehen ist.

Hier ist die Gasabströmöffnung 1 wiederum nicht (oder, bei alternativen Ausführungen zumindest nicht vollständig) von den Ventilschlusslagen 6a, 6b verdeckt, welchletztere als Zwischenlagen zwischen Außenlage 1 und Innenlage 7 ausgeführt sind. Vielmehr sind die Gasabströmöffnung 1 in der Außenlage 2, die Gasdurchstromöffnungen 4a, 4b in den Ventilschlusslagen 6a, 6b und eine Innenöffnung 8 in der Innenlage 7 in etwa fluchtend angeordnet. Bei alternativer Ausführung überdecken sie sich zumindest teilweise. Alle Öffnungen 1, 4a, 4b und 8 können wiederum durch Stanzen hergestellt sein.

Im Randbereich 3 des Airbagmantelelements sind die Ventilschlusslagen 6a, 6b jeweils über eine Verklebung 5 miteinander, mit der Außenlage 2 und mit der Innenlage 7 verbunden. Alle Lagen 2, 6a, 6b, 7 können jeweils aus einem Kunststofffolienverbund, einer einlagigen Folie, einem möglichst gasdichten Gewebe oder dergleichen gefertigt sein. Innerhalb der vom Randbereich 3 umgebenen Fläche sind die Ventilschlusslagen 6a, 6b weder mit der Außenlage 2 noch mit der Innenlage 7 noch miteinander verbunden.

Die Ventilschlusslagen 6a, 6b weisen jeweils eine Trennlinie 9a, 9b in Form eines offenen Rings (ähnlich Fig. 3) auf, welcher die Gasdurchströmöffnung 4 umgibt. Die Unterbrechung des Trennlinienrings 9a in der ersten Ventilschlusslage 6a ist dabei an der (in der Lagenebene) gegenüberliegenden Seite vorgesehen, als die Unterbrechung des Trennlinienrings 9b in der zweiten Ventilschlusslage 6b. Mit anderen Worten kann die Trennlinie 9a so ausgeführt sein, wie die Trennlinie 9 in Fig. 3, die Trennlinie 9b entsprechend wie die Trennlinie 9 in Fig. 3 um 180 Grad gedreht.

Bei steigendem Airbaginnendruck erfährt das Airbagmantelelement eine zunehmende Wölbung, wie in Fig. 7 dargestellt. Der Bereich der Ventilschlusslagen 6a, 6b, welcher die jeweilige Gasdurchströmöffnung 4a, 4b enthält, ist aufgrund der Trennlinie 9a bzw. 9b nur einseitig fixiert und vom Rest des Systems weitgehend entkoppelt, so dass er sich relativ zur Außenlage 2 und Innenlage 7 verschiebt. Aufgrund der (in der Lagenebene) einander gegenüberliegenden Ausbildung der Trennlinien 9a, 9b verschiebt sich der Bereich der ersten Ventilschlusslage 6a mit entsprechender Gasdurchströmöffnung 4a in die entgegengesetzte Richtung wie der Bereich der zweiten Ventilschlusslage 6b mit entsprechender Gasdurchströmöffnung 4b.

Mit zunehmender Auswölbung der Außenlage 2 und Innenlage 7 fluchten die Gasdurchstromöffnungen 4a, 4b in den Ventilschlusslagen 6a, 6b immer weniger miteinander, mit der Gasabströmöffnung 1 in der Außenlage und der Innenöffnung 8 in der Innenlage 7. Stattdessen wird ein immer größerer Bereich der Gasabströmöffnung 1 von den Ventilschlusslagen 6a. 6b überdeckt und der Gasabstrom so behindert.

Die Auslegung kann wiederum über Versuche erfolgen. Als Auslegungsparameter stehen dabei, neben Materialeigenschaften wie Materialstärke. Dehnbarkeit und Elastizität, insbesondere Form und Größe der Gasdurchstromöffnungen 4a, 4b, der Gasabströmöffnung 1 und der Innenöffnung 8 zur Verfügung. Ferner kann auch deren Anfangslage relativ zueinander so verändert werden, dass sie sich jeweils nur teilweise überdecken. Zudem sind Variationen der Anordnung der Trennungslinien 9a und 9b in den Ventilschlusslagen 6a, 6b relativ zueinander möglich.

## Patentansprüche

1. Airbagmantelelement, aufweisend eine Außenlage (2) mit einer Gasabströmöffnung (1) und eine airbaginnendruckabhängig einen Gasabstrom durch die Gasabströmöffnung (1) behindernde, auf der dem Airbaginneren zugewandten Seite der Außenlage (2) angeordnete Ventilschlusslage (6, 6a), **dadurch gekennzeichnet, dass** die Ventilschlusslage (6, 6a) eine umlaufende Randfixierung (5) aufweist, mit welcher sie an der Außenlage (2) fixiert ist, innerhalb des von der Randfixierung (5) umrandeten Bereichs frei von Verbindungen zur Außenlage (2) und anderen Lagen des Airbagmantelelements ist und innerhalb des von der Randfixierung (5) umrandeten Bereich mindestens eine Gasdurchströmöffnung (4, 4a) aufweist.

2. Airbagmantelelement nach Anspruch 1, wobei die Gasdurchströmöffnung (4) zur Gasabströmöffnung (1) überschneidungsfrei versetzt ist und die Gasabströmöffnung (1) öffnungsfrei überdeckt.

3. Airbagmantelelement gemäß einem der vorangehenden Ansprüche, wobei die Gasdurchströmöffnung (4) als Materialausnehmung ausgeführt ist.

4. Airbagmantelelement gemäß einem der vorangehenden Ansprüche, wobei die Ventilschlusslage (6) mehrere die Gasabströmöffnung (1) ringförmig umgebende Gasdurchströmöffnungen (4) aufweist.

5. Airbagmantelelement gemäß einem der vorangehenden Ansprüche, wobei die Ventilschlusslage (6) und die Außenlage (2) miteinander verklebt und/oder verschweißt sind.

6. Airbagmantelelement nach einem der vorangehenden Ansprüche, wobei die Ventilschlusslage (6, 6a) als Zwischenlage zwischen der Außenlage (2) und einer Innenlage (7) angeordnet ist, die Innenlage eine die Gasabströmöffnung (1) zumindest teilweise überdeckende Innenöffnung (8) aufweist, wobei die Gasdurchströmöffnung (4, 4a) die Gasabströmöffnung (1) und die Innenöffnung (8) airbaginnendruckabhängig jeweils zumindest teilweise überdeckt und die Gasdurchströmöffnung (4, 4a) airbaginnendruckabhängig relativ zur Gasabströmöffnung (1) und/oder zur Innenöffnung (8) tangential verschiebliche ausgebildet ist.

7. Airbagmantelelement gemäß Anspruch 6, wobei die Ventilschlusslage (6, 6a) eine die Gasdurchströmöffnung (4, 4a) teilweise umgebende Trennlinie (9) aufweist.

8. Airbagmantelelement gemäß Anspruch 7, wobei die Ventilschlusslage (6) an der Trennlinie (9) vollständig durchtrennt ist.

9. Airbagmantelelement gemäß Anspruch 7, wobei die Trennlinie (9) als Schwächungslinie ausgeführt ist.

10. Airbagmantelelement gemäß einem der Ansprüche 6-9, wobei die Ventilschlusslage (6, 6a) mit der Außenlage (2) und/oder der Innenlage (7) verklebt ist.

11. Airbagmantelelement gemäß einem der Ansprüche 6-10, wobei die Ventilschlusslage (6, 6a) mit der Außenlage (2) und/oder der Innenlage (7) verschweißt ist.

12. Airbagmantelelement gemäß einem der Ansprüche 6-11, welches eine zwischen Ventilschlusslage (6a) und Innenlage (7) angeordnete weitere Ventilschlusslage (6b) aufweist, wobei die weitere Ventilschlusslage (6b) eine die Gasabströmöffnung (1) und die Innenöffnung (8) airbaginnendruckabhängig jeweils zumindest teilweise überdeckende und airbaginnendruckabhängig relativ zur Gasdurchströmöffnung (4a) der anderen Ventilschlusslage (6a) sowie relativ zur Gasabströmöffnung (1) und/oder zur Innenöffnung tangential verschiebliche Gasdurchströmöffnung (4b) aufweist.

## Claims

1. An airbag shell element comprising an outer layer (2) including a gas discharge opening (1) and a valve closure layer (6, 6a) which impedes a gas discharge through the gas discharge opening (1) as a function of the airbag's inner pressure and is arranged on the side of the outer layer (2) facing the airbag interior, **characterized in that** the valve closure layer (6, 6a) comprises a surrounding edge fixation feature (5) by means of which it is fixed to the outer layer (2), is free of any points of connection to the outer layer (2) and other layers of the airbag shell element within the area surrounded by the edge fixation feature (5) and comprises at least one gas through-flow opening (4, 4a) within the area surrounded by the edge fixation feature (5).

2. The airbag shell element according to claim 1, wherein the gas through-flow opening (4) is offset relative to the gas discharge opening (1) without any overlaps and covers the gas discharge opening (1) without forming any opening.

3. The airbag shell element according to any of the preceding claims, wherein the gas through-flow opening (4) is realized as a material recess.

4. The airbag shell element according to any of the preceding claims, wherein the valve closure layer (6) comprises a plurality of gas through-flow openings (4) annularly surrounding the gas discharge opening (1).

5. The airbag shell element according to any of the preceding claims, wherein the valve closure layer (6) and the outer layer (2) are glued and/or welded to each other.

6. The airbag shell element according to any of the preceding claims, wherein the valve closure layer (6, 6a) is arranged as an intermediate layer between the outer layer (2) and an inner layer (7), the inner layer (7) comprises an inner opening (8) which overlaps the gas discharge opening (1) at least in part, the gas through-flow opening (4, 4a) overlaps both the gas discharge opening (1) and the inner opening (8) as a function of the airbag's inner pressure at least in part and the gas through-flow opening (4, 4a) is designed so as to be tangentially movable relative to the gas discharge opening (1) and/or to the inner opening (8) as a function of the airbag's inner pressure.

7. The airbag shell element according to claim 6, wherein the valve closure layer (6, 6a) comprises a separating line (9) partially surrounding the gas through-flow opening (4, 4a).

8. The airbag shell element according to claim 7, wherein the valve closure layer (6) is completely severed at the separating line (9).

9. The airbag shell element according to claim 7, wherein the separating line (9) is realized as a weakening line.

10. The airbag shell element according to any of the claims 6 to 9, wherein the valve closure layer (6, 6a) is glued to the outer layer (2) and/or the inner layer (7).

11. The airbag shell element according to any of the claims 6 to 10, wherein the valve closure layer (6, 6a) is glued to the outer layer (2) and/or the inner layer (7).

12. The airbag shell element according to any of the claims 6 to 11, comprising an additional valve closure layer (6b) between the valve closure layer (6a) and the inner layer (7), the additional valve closure layer (6b) comprising a gas through-flow opening (4b) which at least partially overlaps the gas discharge opening (1) and the inner opening (8) as a function of the airbag's inner pressure and can be tangentially moved relative to the gas through-flow opening (4a) of the other valve closure layer (6a) as well as relative to the gas discharge opening (1) and/or the inner opening as a function of the airbag's inner pressure.

## Revendications

1. Elément d'enveloppe d'airbag présentant une couche extérieure (2) avec un orifice d'échappement de gaz (1) et une couche de fermeture de soupape (6, 6a) disposée du côté de la couche extérieure (2) qui est tourné vers l'intérieur de l'airbag et empêchant un échappement de gaz par l'orifice d'échappement de gaz (1) en fonction de la pression intérieure de l'airbag, **caractérisé en ce que** la couche de fermeture de soupape (6, 6a) présente une fixation marginale (5) périphérique qui permet de la fixer sur la couche extérieure (2), est exempte de liaisons avec la couche extérieure (2) et d'autres couches de l'élément d'enveloppe d'airbag à l'intérieur de la zone entourée par la fixation marginale (5) et présente au moins un orifice de passage de gaz (4, 4a) à l'intérieur de la zone entourée par la fixation marginale (5).

2. Elément d'enveloppe d'airbag selon la revendication 1, où l'orifice de passage de gaz (4) est décalé sans intersection par rapport à l'orifice d'échappement de gaz (1) et recouvre sans orifice l'orifice d'échappement de gaz (1).

3. Elément d'enveloppe d'airbag selon l'une des revendications précédentes, où l'orifice de passage de gaz (4) est réalisé comme évidement de matière.

4. Elément d'enveloppe d'airbag selon l'une des revendications précédentes, où la couche de fermeture de soupape (6) présente plusieurs orifices de passage de gaz (4) entourant en forme d'anneau l'orifice d'échappement de gaz (1).

5. Elément d'enveloppe d'airbag selon l'une des revendications précédentes, où la couche de fermeture de soupape (6) et la couche extérieure (2) sont collées et/ou soudées ensemble.

6. Elément d'enveloppe d'airbag selon l'une des revendications précédentes, où la couche de fermeture de soupape (6, 6a) est disposée comme couche intermédiaire entre la couche extérieure (2) et une couche intérieure (7), la couche intérieure présente un orifice intérieur (8) recouvrant au moins en partie l'orifice d'échappement de gaz (1), où l'orifice de passage de gaz (4, 4a) recouvre au moins en partie respectivement l'orifice d'échappement de gaz (1) et l'orifice intérieur (8) en fonction de la pression intérieure de l'airbag, et l'orifice de passage de gaz (4, 4a) est constitué de manière tangentiellement translatable par rapport à l'orifice d'échappement de gaz (1) et/ou à l'orifice intérieur (8) en fonction de la pression intérieure de l'airbag.

7. Elément d'enveloppe d'airbag selon la revendication 6, où la couche de fermeture de soupape (6, 6a) présente une ligne de séparation (9) entourant en partie l'orifice de passage de gaz (4, 4a).

8. Elément d'enveloppe d'airbag selon la revendication 7, où la couche de fermeture de soupape (6) est entièrement sectionnée au niveau de la ligne de séparation (9).

9. Elément d'enveloppe d'airbag selon la revendication 7, où la ligne de séparation (9) est réalisée comme ligne de fragilisation.

10. Elément d'enveloppe d'airbag selon l'une des revendications 6 à 9, où la couche de fermeture de soupape (6, 6a) est collée à la couche extérieure (2) et/ou à la couche intérieure (7).

11. Elément d'enveloppe d'airbag selon l'une des revendications 6 à 10, où la couche de fermeture de soupape (6, 6a) est soudée à la couche extérieure (2) et/ou à la couche intérieure (7).

12. Elément d'enveloppe d'airbag selon l'une des revendications 6 à 11, qui présente une couche de fermeture de soupape supplémentaire (6b) disposée entre la couche de fermeture de soupape (6a) et la couche intérieure (7), où la couche de fermeture de soupape supplémentaire (6b) présente un orifice de passage de gaz (4b) recouvrant au moins en partie respectivement l'orifice d'échappement de gaz (1) et l'orifice intérieur (8) en fonction de la pression intérieure de l'airbag et étant tangentiellement translatable par rapport à l'orifice de passage de gaz (4a) de l'autre couche de fermeture de soupape (6a) ainsi que par rapport à l'orifice d'échappement de gaz (1) et/ou à l'orifice intérieur en fonction de la pression intérieure de l'airbag.
